(19)

Europäisches Patentamt

European Patent Office

Office européen des brevets

(11) Publication number: **0 372 875 B1**

# EUROPEAN PATENT SPECIFICATION

(45) Date of publication of patent specification: **08.03.95**

(51) Int. Cl.[6]: **C08L 51/06**, C09J 151/06, //(C08L51/06,53:00)

(21) Application number: **89312597.1**

(22) Date of filing: **01.12.89**

(54) **Polypropylene resin compositions.**

(30) Priority: **02.12.88 JP 304209/88**

(43) Date of publication of application:
**13.06.90 Bulletin 90/24**

(45) Publication of the grant of the patent:
**08.03.95 Bulletin 95/10**

(84) Designated Contracting States:
**BE DE FR GB NL**

(56) References cited:
**EP-A- 0 325 952**
**US-A- 4 361 628**
**US-A- 4 694 031**
**US-A- 4 735 988**

**DATABASE WPIL, accession no. 85-052399 [09], Derwent Publications Ltd, London, GB; & JP-A-60 008 347**

(73) Proprietor: **MITSUI TOATSU CHEMICALS, Inc.**
**2-5 Kasumigaseki 3-chome**
**Chiyoda-Ku**
**Tokyo 100 (JP)**

(72) Inventor: **Suehiro, Keigo**
**1172-3, Kamikurata-cho**
**Totsuka-ku**
**Yokohama-shi**
**Kanagawa (JP)**
Inventor: **Nitta, Katsuyuki**
**3-42-7, Hirato**
**Totsuka-ku**
**Yokohama-shi**
**Kanagawa (JP)**
Inventor: **Kawai, Yoichi**
**1541, Yabe-cho**
**Totsuka-ku**
**Yokohama-shi**
**Kanagawa (JP)**
Inventor: **Miyazaki, Takashi**
**7-14-8, Minamikoiwa**
**Edogawa-ku**
**Tokyo (JP)**
Inventor: **Yokote, Sachio**
**2882, Iijima-cho**
**Sakae-ku**
**Yokohama-shi**
**Kanagawa (JP)**

(74) Representative: **Harvey, David Gareth et al**
**Graham Watt & Co.**
**Riverhead**
**Sevenoaks**
**Kent TN13 2BN (GB)**

**Description**

The present invention relates to a polypropylene resin composition useful as an adhesive and, more particularly, to a polypropylene composition useful as an adhesive between a polypropylene resin layer and an ethylene/vinyl alcohol copolymer layer or a polyamide resin layer.

Laminates comprising a polypropylene resin layer and an ethylene/vinyl alcohol copolymer layer, or a polypropylene resin layer and a polyamide resin layer are low in oxygen permeability and moisture vapor permeability, and therefore are widely used, for example, for containers for foods and medicines.

However, since adhesion between a polypropylene resin layer and an ethylene/vinyl alcohol copolymer layer or a polyamide resin layer is poor, a molding method is generally employed wherein an adhesive layer is placed between the resin layers by co-extrusion.

It is well known that polyolefin resins graft-modified with an unsaturated carboxylic acid or derivative thereof may be used as a bonding layer (see for example Japanese Patent Application Laid-Open Nos. 5527/1973, 98784/1976, and 26548/1977).

It is also known that the bonding strength between the resin layers may be improved by adding a low-density polyethylene to the graft-modified polyolefin resin (see for example Japanese Patent Publication No. 40113/1979), by adding a high-density polyethylene to the graft-modifed polyolefin resin (see for example Japanese Patent Publication No. 36586/1984), and by adding a hydrocarbon elastomer to the graft-modified polyolefin resin (see for example Japanese Patent Publication No. 40112/1979). It is also known to use a mixture comprising a propylene/ethylene block copolymer, an ethylene/α-olefin random copolymer, an unsaturated carboxylic acid or its derivative and an organic peroxide (see for example Japanese Patent Application Laid-Open No. 41205/1981). However, such a mixture results in odor and inferior coloring due to unreacted monomers.

When compositions prepared by adding a low-density polyethylene, a high-density polyethylene, or a hydrocarbon elastomer to a graft-modified polyolefin resin are employed as an adhesive layer, the performance is inadequate. For example, in the case wherein a laminate made up of a polypropylene resin layer and an ethylene/vinyl alcohol copolymer layer or a polyamide layer is blow molded into a bottle, the thin section of the product is low in adhesive strength. Accordingly, further improvement is required.

Further, the above prior art compositions have low softening points and as a result the adhesive strength under high temperatures is extremely lowered.

Database WPIL, acc. no. 85052399, discloses an adhesive composition comprising a three or four component blend of (A) crystalline polypropylene grafted with one or more unsaturated carboxylic acids and their anhydrides, (B) unmodified crystalline polypropylene, and (C) either or both of ethylene polymers and styrene copolymers.

EP-A-0 325 952 discloses an adhesive composition comprising a blend of a non-elastomeric copolymer of propylene and ethylene, a graft copolymer comprising a propylene polymer backbone and an unsaturated carboxylic acid or acid derivative grafted onto the backbone, the blend further comprising an adhesion promoter in the form of an ethylene homopolymer.

The present invention aims to overcome the problems and disadvantages of the prior art, and to this end it provides a polypropylene resin composition useful as an adhesive, particularly for bonding a polypropylene resin layer and an ethylene/vinyl alcohol copolymer layer or a polyamide resin layer.

Further, the invention aims to provide a polypropylene resin composition that has superior bonding strength at high temperatures.

Additional objects and advantages of the invention will be set forth or will become apparent from the non-limitative description which follows, or may be learned by practice of the invention.

To achieve the objects and in accordance with the purpose of the invention, as embodied and broadly described herein, the present invention provides a polypropylene resin composition useful as an adhesive, particularly for bonding a polypropylene resin layer and an ethylene/vinyl alcohol copolymer layer or a polyamide resin layer, wherein the composition comprises a modified polypropylene resin graft-modified with a radical-polymerizable unsaturated compound, and a crystalline propylene/ethylene block copolymer containing from 10 wt.% to 50 wt.% of a propylene/ethylene random copolymer having an ethylene content of from 30 wt.% to 80 wt.%, the radical-polymerizable unsaturated compound being present in the polypropylene composition in an amount of from 0.01 to 2 wt.%.

The invention will now be described in more detail, non-limitingly and by way of example only, with reference to preferred embodiments of the invention.

The modified polypropylene resin employed in the present invention may be prepared by numerous processes. Exemplary suitable processes include a process wherein a polypropylene resin obtained by polymerization is mixed with a prescribed amount of an organic solvent (e.g., chlorobenzene), and then heated to form a solution. A solution containing a prescribed amount of organic peroxide (e.g., di-t-butyl peroxide), an organic solvent, and a radical-polymerizable unsaturated compound (e.g., an unsaturated carboxylic acid such as maleic anhydride) is added thereto under an atmosphere of nitrogen, and the mixture is stirred under heating to react for a certain period of time. The reaction mixture is then cooled, filtered, and dried to produce a grafted polypropylene. Generally, the graft ratio is not greater than about 20 wt.%.

There is no particular limitation on the type of polypropylene to be grafted and use can be made, for example, of propylene homopolymers, propylene/α -olefin copolymers, and thermally degraded homopolymers and copolymers obtained by heating the polymers in the presence of a thermal degrading agent.

Exemplary suitable radical-polymerizable unsaturated compounds for use in the invention include α , β - unsaturated aliphatic mono- and di-carboxylic acids, and their derivatives such as acrylic acid and methacrylic acid, and their methyl ester compounds, itaconic acid, maleic acid, and citraconic acid, or their anhydride, ester, and amide compounds. Maleic anhydride is particularly preferred.

Although the content of the graft-modified polypropylene resin in the present composition will vary depending on the graft ratio of the grafted polypropylene, the modified polypropylene resin is present in an amount such that the content of the radical-polymerizable unsaturated compound in the composition of the invention is from 0.01 to 2 wt. %, preferably from 0.05 to 1 wt. %. The inventors have found that when the radical-polymerizable unsaturated compound is present in an amount less than 0.01 wt. %, the adhesion strength is low, whereas if present in an amount greater than 2 wt. %, the cost of production increases and the adhesion strength tends to decrease.

The crystalline propylene/ethylene block copolymer employed in the invention is a crystalline propylene/ethylene block copolymer containing from 10 to 50 wt. % of a propylene/ethylene random copolymer segment having an ethylene content of from about 30 to 80 wt. % .

An exemplary suitable process for preparing a crystalline propylene/ethylene block copolymer for use in the invention includes using a catalyst system containing a mixture of at least one transition metal catalyst such as $TiCl_3 \cdot 1/3Al\ Cl_3$ or carrier catalysts including a titanium compound supported on a magnesium compound such as $MgCl_2$ with one or more organic aluminum catalysts such as $AlEt_3$, $AlEt_2Cl$, $AlEt_2H$, or $Al$-iso-$Bu_3$, and if necessary, a third component such as an ester compound and an ether compound.

The propylene/ethylene block copolymer preferably contains (A) from 50 wt. %, to 90 wt. %, more preferably from 80 to 60 wt. %, of a propylene-rich polymer containing at least 97 wt. %, most preferably at least 98 wt. % of propylene, and (B) from 10 to 50 wt. %, more preferably from 20 to 40 wt. %, of a propylene/ethylene random copolymer having a propylene/ethylene weight ratio of 70/30 to 20/80.

A polymerization process wherein suspension polymerization is effected in an inert solvent such as heptane or hexane or liquefied propylene, a gas phase polymerization process, or a combination of these processes may be employed. It is preferred to polymerize the propylene/ethylene random copolymer in the latter stage in view of handling (see for example Japanese Patent Application Laid-Open Nos. 41311/1984, and 41316/1984).

We have found that if the propylene/ethylene random copolymer in the crystalline propylene/ethylene block copolymer is present in an amount less than 10 wt. %, the adhesive strength decreases. On the other hand if present in an amount greater than 50 wt. %, the resulting adhesive polypropylene decreases in rigidity, and the adhesive strength thereof at high temperatures decreases.

In addition, the crystalline propylene/ethylene block copolymer used may also contain a propylene homopolymer segment, which may be formed by copolymerization of propylene with an α-olefin other than propylene if the α-olefin is employed in an amount that does not adversely effect the properties of the composition of the present invention.

To the present adhesive polypropylene composition may be added, if required, other resins and additives such as usual medium- to low-density polyethylenes, ultra-low-density polyethylenes, hydrocarbon elastomers, ethylene/vinyl acetate copolymers, ethylene/vinyl alcohol copolymers, polyamides, antioxidants, ultraviolet absorbers, pigments, dyes, fillers, nucleating agents, anti-blocking agents, slip agents, antistatic agents, and fire retardants. Such additives are only employed in an amount that does not adversely effect the properties of the composition of the present invention.

The present polypropylene composition may be prepared by premixing the components by a Henschel mixer, and then melting and kneading the mixture by a uniaxial extruder, a biaxial extruder or the like to be pelletized.

A laminate consisting of an ethylene/vinyl alcohol copolymer layer or a polyamide layer and a polypropylene resin layer by using the present polypropylene composition as an adhesive may be prepared by the following process.

4

Generally known polypropylenes, ethylene/vinyl alcohol copolymers, and polyamides may be employed in the present invention. If required, these compounds contain known additives such as antioxidants, ultraviolet absorbers, pigments, dyes, fillers, nucleating agents, anti-blocking agents, slip agents, antistatic agents, and fire retardants.

The following exemplary methods may be employed to produce a laminate from the composition of the invention. A method may be employed wherein films or sheets of a polypropylene layer, an ethylene/vinyl alcohol copolymer layer or polyamide resin layer respectively, and an adhesive layer are prepared, and the adhesive layer is sandwiched between the other resin films or sheets, followed by thermocompression bonding. In another method, a melted adhesive layer composition is extruded onto one of a polypropylene resin film or sheet, and an ethylene/vinyl alcohol copolymer or polyamide resin film or sheet, and the other resin film or sheet is placed thereon. In still another method, polypropylene, ethylene/vinyl alcohol copolymer or polyamide resin, and an adhesive layer composition are melted in extruders and are co-extruded through a single die.

The extrusion temperatures at which the polypropylene and the ethylene/vinyl alcohol copolymer or the polyamide resin are extruded may be extrusion temperatures conventionally used. The extrusion temperature at which the adhesive layer composition is extruded is preferably from about 190 to about 300°C , more preferably from about 200 to about 280°C .

Preferably, the thickness of the adhesive layer is from about 0.005 to about 0.1 mm. If the thickness is less than about 0.005 mm, the adhesive strength of the laminate is inadequate. On the other hand, if the thickness is greater about 0.1 mm, the adhesion strength can not be increased.

The laminate may be in the shape, for example, of a film, a sheet, a pipe, a corrugated sheet, or a container such as a bottle made for example by injection molding or blow molding. It is also possible to produce a laminate sheet and then form various containers therefrom, for example, by vacuum forming or air-pressure forming.

The laminate can be formed into blown containers, films, sheets or the like that can be uniaxially or biaxially stretched.

The invention will be further clarified by the following examples, which are intended to be purely exemplary of the invention.

EXAMPLES

In the following description, the adhesive strength was measured in accordance with JIS-K-6854 (T-type peeling test).

The proportion of the propylene/ethylene random copolymer was determined on the basis of the material balance at the time of polymerization, and the ethylene content of the propylene/ethylene random copolymer segment was determined in such a manner that the ethylene content of the the propylene/ethylene block copolymer was found according to a method using $^{13}$C-NMR (e.g., the method described by G.J. Ray et al. in Makromol, 10, 773 (1977)), and it then was calculated from the above proportion of the random copolymer.

Examples 1 to 4 and Comparative Examples 1 to 3

Isotactic polypropylene having a molecular weight of 215,000 was passed through an extruder in the presence of 2,5-dimethyl-2,5-di(t-butylperoxy)hexane to degrade it thermally. The thus prepared polypropylene having a molecular weight of 143,000 was reacted with maleic anhydride in chlorobenzene at 126°C using dicumyl peroxide as a catalyst followed by cooling. The resulting slurry was washed with a large amount of acetone, filtered, and dried to obtain a grafted polypropylene. According to the IR measurement, the maleic anhydride content of the grafted polypropylene was 11.8 wt. %.

This grafted polypropylene and polypropylenes for blending shown in Table 1 were blended in the proportions set forth in Table 1. To 100 parts by weight of each of the blends were added 0.3 parts by weight of calcium stearate, 0.25 parts by weight of tris(2,4-di-t-butylphenyl)phosphite, and 0.3 parts by weight of pentaerythrityltetrakis [ 3-(3,5-di-t-butyl-4-hydroxyphenyl)propionate] , and mixed by a Henschel mixer. Each mixture was pelletized by a 40-mmØ uniaxial extruder at 230°C to produce polypropylene compositions for adhesive layers.

Each of the compositions obtained above, polypropylene (having an MI of 1.5 available under the trade name "Mitsui Noblen MJS-G" from Mitsui Toatsu Chemicals, Inc.), and ethylene/vinyl alcohol copolymer (having an MI of 1.3 available under the trade name "Eval F" from Kurare Co., Ltd.) were co-extruded by using a feed block die into three resins and five layers, i.e. a polypropylene layer/an adhesive layer/an ethylene/vinyl alcohol copolymer layer/an adhesive layer/a polypropylene layer thereby forming each parison with an outer diameter of 39 mmØ and a thickness of 4 mm, and the parison was molded by blow molding (at an air pressure of 5.0 kg/cm$^2$) into a container having a volume of 850 cc (the product weight: 56 g; and the outer diameter of the product: 90 mmØ). In feeding the resins into the feed block, a 40-mm Ø extruder was used for the polypropylene layer, a 30-mmØ extruder was used for the adhesive layer composition, and a 30-mm Ø extruder was used for the ethylene/vinyl alcohol copolymer layer.

The side wall section of each container was removed, and the peel strength was measured. For the measurement, in addition to samples at room temperature (23°C), samples heated to 80°C and 120°C were also used.

The extrusion temperature for each resin was 200 °C, the extrusion temperature of the die section and the feed block section was also 200°C.

The thickness of the section where the peel strength had been measured was such that the polypropylene layer/the adhesive layer/the ethylene/vinyl alcohol copolymer layer/the adhesive layer/the polypropylene layer = 0.45/0.03/0.04/0.03/0.04 mm.

Table 1

| | Polypropylene for blending | | | Added amount of grafted polypropylene (wt.%) | Peel strength (g/cm) | | |
|---|---|---|---|---|---|---|---|
| | Composition | | Added amount (wt.%) | | 23℃ | 80℃ | 120℃ |
| | Proportion of propylene/-ethylene random copolymer segment in polypropylene for blending (wt.%) | Ethylene content of propylene/ethylene random copolymer segment (wt.%) | | | | | |
| Ex. 1 | 30.4 | 59.6 | 97.5 | 2.5 | 3500 | 2800 | 2050 |
| Ex. 2 | 14.8 | 62.3 | 97.5 | 2.5 | 2600 | 2300 | 1900 |
| Ex. 3 | 45.2 | 32.6 | 97.5 | 2.5 | 3200 | 2640 | 1830 |
| Ex. 4 | 32.1 | 48.9 | 97.5 | 2.5 | 3160 | 2710 | 2130 |
| Com. Ex. 1 | 8.0 | 58.1 | 97.5 | 2.5 | 1260 | 1030 | 920 |
| Com. Ex. 2 | 54.2 | 60.4 | 97.5 | 2.5 | 3210 | 630 | 420 |
| Com. Ex. 3 | 35.2 | 17.3 | 97.5 | 2.5 | 1450 | 1320 | 1130 |

Example 5

Example 1 was repeated, except that 94.5 wt. % of the propylene/ethylene copolymers employed in Example 1, 2.5 wt. % of the grafted polypropylene used in Example 1, and 3 wt. % of ethylene/butene-1 copolymer (D9510, manufactured by Nippon Petrochemicals Co., Ltd.) were used. The peel strength was

7

3,800 g/cm at 23°C , 3,050 g/cm at 80°C , and 2,230 g/cm at 120 °C .

Comparative Example 4

Example 1 was repeated, except that 72.5 wt. % of propylene/ethylene random copolymer whose ethylene content was 5.1 wt. % was employed, 2.5 wt. % of the grafted polypropylene employed in Example 1 and 25 wt. % of ethylene/propylene rubber (EP07P, manufactured by Japan Synthetic Rubber Co., Ltd.) were employed, thereby preparing an adhesive polypropylene composition. The molding carried out in Example 1 was conducted and the peel strength was measured. The peel strength was 3,350 g/cm at 23°C , 380 g/cm at 80°C , and 320 g/cm at 120 °C, showing drastic decreases in the peel strength at high temperatures.

Example 6

Example 1 was repeated, except that instead of the ethylene/vinyl alcohol copolymer used in Example 1 "UBE nylon 1011" was employed (that is a trade name and is manufactured by Ube Industries, Ltd.). The extrusion temperature of the nylon was 250°C , the temperature of the feed block was 250°C and the temperature of the die was 245 °C, thereby carrying out the test. The thickness of the section where the peel strength had beenmeasured was such that the polypropylene layer/the adhesive layer/the nylon layer/the the adhesive layer/the polypropylene layer = 0.45/0.04/-0.03/0.04/0.4 mm.

The peel strength was 4,320 g/cm at 23 °C , 3,620 g/cm at 80°C , and 3,050 g/cm at 120 °C .

When the present polypropylene composition is used as an adhesive layer, the adhesion strength between a polypropylene layer and an ethylene/vinyl alcohol copolymer layer or a polyamide layer can be made high. When a laminate formed by using the present polypropylene composition is molded into a product, for example, by blow molding or vacuum forming, the adhesion strength of the product is good even at a thin wall section and good adhesion strength can be maintained even at high temperature. The, laminate is useful for example for producing containers for retort pouch food.

Other enbodiments of the invention will be apparent to those skilled in the art from consideration of the specification and practice of the invention disclosed herein. It is intended that the specification and examples be considered as exemplary only, with the scope of the invention being indicated by the following claims.

## Claims

1. A polypropylene composition useful as an adhesive, comprising a modified polypropylene resin graft-modified with a radical-polymerizable unsaturated compound, and a crystalline propylene/ethylene block copolymer containing from 10 to 50 wt.% of a propylene/ethylene random copolymer having an ethylene content of from 30 wt.% to 80 wt.%, the radical-polymerizable unsaturated compound being present in the polypropylene composition in an amount of from 0.01 wt.% to 2 wt.%.

2. The composition according to claim 1, wherein the radical-polymerizable unsaturated compound is present in the polypropylene composition in an amount of from 0.05 to 1 wt.%.

3. The composition according to claim 1 or claim 2, wherein the radical-polymerizable unsaturated compound is selected from $\alpha$, $\beta$-unsaturated aliphatic monocarboxylic acids, derivatives thereof, $\alpha$, $\beta$-unsaturatedaliphatic di-carboxylic acids and derivatives thereof.

4. The composition according to claim 3, wherein the radical-polymerizable unsaturated compound is selected from acrylic acid, methacrylic acid, itaconic acid, maleic acid, and citraconic acid, and anhydrides, esters and amides thereof, the unsaturated compound for example being maleic anhydride.

5. The composition according to any of claims 1 to 4, wherein the crystalline propylene/ethylene block copolymer contains from 50 wt.% to 90 wt.% of a propylene-rich polymer containing at least 97 wt.% propylene, and from 10 wt.% to 50 wt.% of a propylene/ethylene random copolymer having a propylene/ethylene weight ratio of from 80/20 to 10/90.

6. The composition according to claim 5, wherein said crystalline propylene/ethylene block copolymer contains from 60 wt.% to 80 wt.% of a propylene-rich polymer segment containing at least 98 wt.%

propylene, and from 20 wt.% to 40 wt.% of a propylene/ethylene random copolymer having a propylene/ethylene weight ratio of from 70/30 to 20/80.

7. The composition according to any of claims 1 to 6, wherein the crystalline propylene/ethylene block copolymer further comprises a propylene homopolymer.

8. The composition according to any of claims 1 to 7, further comprising an additive, the additive for example being selected from medium to low density polyethylenes, ultra-low-density polyethylenes, hydrocarbon elastomers, ethylene/vinyl acetate copolymers, ethylene/vinyl alcohol copolymers, polyamides, antioxidants.

9. Use of the polypropylene composition according to any of claims 1 to 8, for bonding a polypropylene resin layer and either an ethylene/vinyl alcohol copolymer layer or a polyamide resin layer.

10. A laminate comprising the polypropylene composition according to any of claims 1 to 8.

**Patentansprüche**

1. Polypropylenzusammensetzung, die als ein Klebstoff verwendbar ist, welche ein modifiziertes Polypropylenharz, das mit einer radikalpolymerisierbaren, ungesättigten Verbindung pfropfmodifiziert ist, und ein kristallines Propylen/Ethylen-Blockcopolymer, das 10 bis 50 Gew.-% eines statistischen Propylen/Ethylen-Copolymeren mit einem Ethylengehalt von 30 Gew.-% bis 80 Gew.-% enthält, umfaßt, wobei die radikalpolymerisierbare, ungesättigte Verbindung in der Polypropylenzusammensetzung in einer Menge von 0,01 Gew.-% bis 2 Gew.-% vorliegt.

2. Zusammensetzung gemäß Anspruch 1, worin die radikalpolymerisierbare, ungesättigte Verbindung in der Polypropylenzusammensetzung in einer Menge von 0,05 Gew.-% bis 1 Gew.-% vorliegt.

3. Zusammensetzung gemäß Anspruch 1 oder Anspruch 2, worin die radikalpolymerisierbare, ungesättigte Verbindung aus $\alpha,\beta$-ungesättigten, aliphatischen Monocarbonsäuren, Derivaten davon, $\alpha,\beta$-ungesättigten, aliphatischen Dicarbonsäuren und Derivaten davon ausgewählt wird.

4. Zusammensetzung gemäß Anspruch 3, worin die radikalpolymerisierbare, ungesättigte Verbindung aus Acrylsäure, Methacrylsäure, Itaconsäure, Maleinsäure und Citraconsäure und Anhydriden, Estern und Amiden davon ausgewählt wird, wobei die ungesättigte Verbindung z. B. Maleinsäureanhydrid ist.

5. Zusammensetzung gemäß einem der Ansprüche 1 bis 4, worin das kristalline Propylen/Ethylen-Blockcopolymer 50 Gew.-% bis 90 Gew.-% eines Propylenreichen Polymeren mit mindestens 97 Gew.-% Propylen und 10 Gew.-% bis 50 Gew.-% eines statistischen Propylen/Ethylen-Copolymeren mit einem Propylen/Ethylen-Gewichtsverhältnis von 80/20 bis 10/90 enthält.

6. Zusammensetzung gemäß Anspruch 5, worin das kristalline Propylen/Ethylen-Blockcopolymer 60 Gew.-% bis 80 Gew.-% eines Propylen-reichen Polymersegmentes mit mindestens 98 Gew.-% Propylen und 20 Gew.-% bis 40 Gew.-% eines statistischen Propylen/Ethylen-Copolymeren mit einem Propylen/Ethylen-Gewichtsverhältnis von 70/30 bis 20/80 enthält.

7. Zusammensetzung gemäß einem der Ansprüche 1 bis 6, worin das kristalline Propylen/Ethylen-Blockcopolymer ferner ein Propylenhomopolymer umfaßt.

8. Zusammensetzung gemäß einem der Ansprüche 1 bis 7, die ferner ein Additiv umfaßt, wobei das Additiv z. B. aus Polyethylenen mittlerer bis niederer Dichte, Polyethylenen sehr geringer Dichte, Kohlenwasserstoffelastomeren, Ethylen/Vinylacetat-Copolymeren, Ethylen/Vinylalkohol-Copolymeren, Polyamiden und Antioxidantien ausgewählt wird.

9. Verwendung der Polypropylenzusammensetzung gemäß einem der Ansprüche 1 bis 8 zur Verklebung einer Polypropylenharzschicht und entweder einer Ethylen/Vinylalkohol-Copolymerschicht oder einer Polyamidharzschicht.

**10.** Laminat, das die Polypropylenzusammensetzung gemäß einem der Anspüche 1 bis 8 umfaßt.

**Revendications**

1. Composition de polypropylène utile en tant qu'adhésif comprenant une résine de polypropylène modifié, modifié par greffage à l'aide d'un composé insaturé polymérisable de façon radicalaire et un copolymère séquencé propylène/éthylène cristallin contenant de 10 à 50 % en masse d'un copolymère aléatoire propylène/éthylène ayant une teneur en éthylène comprise entre 30 % en masse et 80 % en masse, le composé insaturé polymérisable de façon radicalaire étant présent dans la composition de polypropylène en une quantité comprise entre 0,01 % en masse et 2 % en masse.

2. Composition selon la revendication 1, dans laquelle le composé insaturé polymérisable de façon radicalaire est présent dans la composition de polypropylène en une quantité comprise entre 0,05 et 1 % en masse.

3. Procédé selon la revendication 1 ou la revendication 2, dans lequel le composé insaturé polymérisable de façon radicalaire est choisi parmi des acides monocarboxyliques aliphatiques insaturés en $\alpha$, $\beta$, des dérivés de ceux-ci, des acides dicarboxyliques aliphatiques insaturés en $\alpha$, $\beta$ et des dérivés de ceux-ci.

4. Composition selon la revendication 3, dans laquelle le composé insaturé polymérisable de façon radicalaire est choisi entre l'acide acrylique, l'acide méthacrylique, l'acide itaconique, l'acide maléique et l'acide citraconique ainsi que des anhydrides, esters et amides de ceux-ci, le composé insaturé étant par exemple l'anhydride maléique.

5. Composition selon l'une quelconque des revendications 1 à 4, dans laquelle le copolymère séquencé propylène/éthylène cristallin contient de 50 à 90 % en masse d'un polymère riche en propylène contenant au moins 97 % en masse de propylène et de 10 à 50 % en masse d'un copolymère aléatoire propylène/éthylène ayant un rapport massique propylène/éthylène compris entre 80/20 et 10/90.

6. Composition selon la revendication 5, dans laquelle ledit copolymère séquencé propylène/éthylène cristallin contient de 60 % en masse à 80 % en masse d'un segment de polymère riche en propylène contenant au moins 98 % de propylène et de 20 à 40 % en masse d'un copolymère aléatoire propylène/éthylène ayant un rapport massique propylène/éthylène compris entre 70/30 et 20/80.

7. Composition selon l'une quelconque des revendications 1 à 6, dans laquelle le copolymère séquencé propylène/éthylène cristallin comprend de plus un homopolymère de propylène.

8. Composition selon l'une quelconque des revendications 1 à 7, comprenant de plus un additif, l'additif étant par exemple choisi parmi des polyéthylènes de moyenne à basse densité, des polyéthylènes de très basse densité, des élastomères d'hydrocarbure, des copolymères éthylène/acétate de vinyle, des copolymères éthylène/alcool vinylique, des polyamides, des antioxydants.

9. Utilisation de la composition de propylène selon l'une quelconque des revendications 1 à 8, pour lier une couche de résine de polypropylène et soit une couche de copolymère éthylène/alcool vinylique, soit une couche de résine de polyamide.

10. Stratifié comprenant la composition de polypropylène selon l'une quelconque des revendications 1 à 8.